# EUROPEAN PATENT SPECIFICATION

(11) **EP 3 946 882 B1**
(45) Date of publication and mention of the grant of the patent: **10.07.2024**
(21) Application number: 20720505.5
(22) Date of filing: 24.03.2020
(51) Int. Cl.: B29C 45/72, B29C 49/64, B29C 49/42, B29K 105/00, B29K 67/00

(54) **PREFORM COOLING APPARATUS**
KÜHLVORRICHTUNG FÜR VORFORMEN
APPAREIL DE REFROIDISSEMENT DE PRÉFORMES

(30) Priority: 26.03.2019 IT 201900004359
(43) Date of publication of application: 09.02.2022
(73) Proprietor: S.I.P.A. Società Industrializzazione Progettazione e Automazione S.p.A., 31029 Vittorio Veneto (IT)
(72) Inventor: ZOPPAS, Matteo, 31015 Conegliano (IT); COROCHER, Carlo, 31015 Conegliano (IT); ARMELLIN, Alberto, 31029 Vittorio Veneto (IT)
(74) Representative: Celona, Antonio
(86) International application number: PCT/IB2020/052752
(87) International publication number: WO 2020/194184

(56) References cited:
- US-A1- 2010 226 749
- US-A1- 2014 271 963
- US-A1- 2016 214 279
- US-A1- 2016 354 623

## Description

### Field of the invention

The present invention relates to an apparatus for cooling preforms made of thermoplastic material, for example made of PET (polyethylene terephthalate). The invention in particular relates to a cooling apparatus of preforms for containers. The containers are bottles, for example. The invention also relates to a component which is particularly adapted to be used in the aforesaid apparatus.

### Background art

Preforms of bottles made of thermoplastic material typically are made by means of an injection or injection-compression molding process. Once molded, the preforms are hot and are to be suitably cooled.

Ventilation means which generate an airflow which hits the preforms to be cooled generally are used for this purpose. The preforms substantially are suspended during the cooling, being supported by gripping means, whereby the outer surface of the preforms is directly hit by the airflow.

The preform cooling step is crucial in order to obtain good quality preforms. As is known, the preforms define a cavity, whereby they have a wall having an inner surface and an outer surface.

A critical aspect relates to the cooling of such surfaces. Indeed, both the inner surface and the outer surface are to be adequately cooled to avoid undesired thermal gradients which induce defects in the preforms.

Another critical aspect relates to the deformation of the preforms, which may become bent due to causes in particular owing to the manner in which the preforms are transported during the cooling, to the aforesaid undesired thermal gradients and to the airflow which hits the preforms.

Desiring to obtain the increased productivity required by the market, the percentage of preforms which are rejected due to the defects thereof is still rather high with the cooling apparatuses of the background art.

Certain known apparatuses, such as the apparatus disclosed in US2014271963A1, provide the insertion of a body inside each preform to be cooled. The body may e.g. be a tube from which a fluid is output. However, these apparatuses are rather complex, in particular because there is an increased number of movable components and there is a need to carry out an insertion step of the aforesaid body into the preform, in addition to a time for the body to remain in the preform being required.

The need is therefore felt to overcome the limits of the background art.

### Summary of the invention

It is an object of the present invention to make an apparatus for cooling preforms which allows optimizing the cooling of the preforms and avoiding defects in the preforms, also when an increased productivity is reached.

In particular, it is an object of the invention to cool the preforms without the insertion of a cooling tube or body into the preforms.

It is another object of the present invention to make a support for preforms of containers, e.g. bottles, which is adapted to be used in a cooling apparatus which allows optimizing the cooling of the preforms and avoiding defects in the preforms, also when an increased productivity is reached.

The present invention achieves at least one of such objects, which will be apparent in light of the present description, by means of a cooling apparatus of preforms, in particular preforms of bottles, made of thermoplastic material, comprising
- a plurality of supports for the preforms adapted to be moved along a path;

wherein each support is externally provided with a plurality of fins;
and wherein each support comprises at least one cavity adapted to accommodate a respective preform; preferably wherein the cooling apparatus comprises at least one duct adapted to receive an airflow generated by ventilation means and configured to direct said airflow towards the supports, in particular so that when the supports and the preforms inserted therein are at the duct, flanked by the duct or below the duct, at least the supports are hit by said airflow which exits from the duct.

The airflow in particular hits at least the fins of the supports.

Preferably, the duct is configured to direct said airflow towards the supports and towards the preforms, in particular towards the fins of the supports and towards the preforms.

In particular, when the supports and the preforms inserted therein are at the duct, in particular flank the duct or are below the duct, the supports and the preforms inserted therein are hit by the airflow.

Advantageously, the cooling apparatus allows avoiding the need to insert a body into the preforms, for example a tube from which air is output.

Therefore, the cooling apparatus preferably does not comprise cooling bodies or tubes, in particular from which an airflow may be output, which cooling bodies or tubes are adapted to be inserted into the preforms.

According to an aspect, the invention relates to a support for preforms, in particular preforms of bottles, adapted to be used in a cooling apparatus, in particular a cooling apparatus according to the invention, wherein the support is externally provided with a plurality of fins and comprises at least one cavity adapted to accommodate a respective preform.

According to an aspect, the invention relates to a system for producing preforms, comprising a cooling apparatus according to the invention; and a molding apparatus for producing the preforms which is arranged upstream and/or downstream of the cooling apparatus.

The inner wall of the support advantageously allows the preform to be confined, thus preventing the deformation thereof and in particular avoiding the bending of the preform.

Indeed, the inner wall of the support which delimits the cavity can come into contact, in particular directly into contact, with at least part of an outer surface of the preform. In particular, the inner wall of the support can come into contact with the outer side surface of the preform extending below the neck, in particular below the support ring of the preform (or ring of the neck), which is known in the field as "support ledge". Further, it is preferable that the inner wall of the support is shaped also to come into contact with the bottom surface of the preform.

The inner wall of the support preferably is adapted to come into contact substantially with the whole outer surface of the preform below the support ring of the preform. The contact between the inner wall of the support and the outer surface of the preform allows an effective heat exchange, in particular by conduction, between the two surfaces.

Further, the fins, or cooling fins, advantageously allow an effective cooling of the support.

According to an aspect, an optimal cooling may be obtained by preferably envisaging that said at least one duct (e.g. one duct) is provided both with openings, e.g. holes, which may direct an airflow into the preforms, and with openings, e.g. holes, which direct an airflow towards the supports. It may in any case be provided that the opening, or the openings, of the duct direct the airflow towards the supports alone.

In particular embodiments, the holes of the duct are positioned and oriented so as to obtain improved cooling results.

According to an aspect, by providing that the support is provided with an extractable insert, or inner part, which defines the cavity for the preform, the support is allowed to quickly adapt to various formats of preforms to be cooled.

The cooling apparatus preferably comprises motion transmission means to which the supports are constrained to be moved along said path.

Said motion transmission means preferably are or comprise a chain or a belt or at least one wheel to which the supports are constrained. For example, there may be provided a wheel to which the supports are constrained, or a wheel revolver, for example one or more wheels to which the supports are constrained, whose rotation is caused by a common wheel.

A device preferably is provided - preferably adapted to rotate - which is configured to insert the preforms to be cooled into the supports and to extract the cooled preforms from the supports.

According to an aspect, an increased level of automation may be obtained by providing a device which may move both the chain or belt to which the supports are fixed, and may insert and extract the preforms into/from the supports. The device in particular preferably comprises a wheel with which the chain or belt is engaged. The gripping means of the device preferably may translate parallel to the rotation axis of the wheel of said device. The gripping means may, for example, rotate and translate upwards or downwards, according to the operation to be performed (insertion or extraction).

Further features and advantages of the invention shall be more apparent in light of the detailed description of non-exclusive embodiments.

The dependent claims describe particular embodiments of the invention.

### Brief description of the Figures

Reference is made in the description of the invention to the accompanying drawings, which are provided by way of example and not by way of limitation, wherein:
Figure 1 shows a perspective view of an apparatus in accordance with the invention;
Figure 2 shows an enlarged detail of Figure 1;
Figure 3 shows an enlarged detail of Figure 2;
Figure 4 shows a perspective view of certain components of a system in accordance with the invention;
Figure 5 shows a perspective view of certain components of an apparatus in accordance with the invention;
Figure 6 shows a perspective view of a device of the apparatus in accordance with the invention;
Figure 7 shows an enlarged detail of Figure 6;
Figure 8 shows a perspective sectional view of certain components of the apparatus in accordance with the invention;
Figure 9 shows a sectional view of certain components of the apparatus in accordance with the invention;
Figure 9A shows a sectional view of certain components of the apparatus in accordance with the invention;
Figure 10 shows a top plan view of a cooling system in accordance with the invention;
Figure 11 shows four curves, of which the two continuous curves show the trend over time of the external and internal temperature, respectively, of a preform cooled by means of the apparatus in accordance with the invention, and the two dotted curves show the trend over time of the external and internal temperature, respectively, of a preform having the same features as the preform related to the continuous curves, cooled by means of an apparatus of comparison.

The same elements or components are indicated with the same reference numeral.

### Description of embodiments of the invention

With reference to the Figures, a cooling apparatus 9 for cooling preforms 8 of bottles made of thermoplastic material, e.g. PET, is described. The cooling apparatus 9 in particular is a post-molding cooling apparatus for cooling preforms which are still hot due to the molding process with which they were produced.

The cooling apparatus 9 preferably does not comprise cooling bodies or tubes, in particular from which an airflow may be output, which cooling bodies or tubes are adapted to be inserted into the preforms.

The cooling apparatus 9 preferably only serves to cool and move the preforms 8. The cooling apparatus 9 preferably does not comprise heating means adapted to heat the preforms 8 or a portion of the preforms 8.

The cooling apparatus 9 comprises:
- a plurality of supports 5 for the preforms 8 adapted to be moved along a path; wherein each support 5 is externally provided with a plurality of fins 51;
and wherein each support 5 comprises at least one cavity 52 adapted to accommodate a respective preform 8.

The cooling apparatus 9 comprises at least one duct 11 adapted to receive an airflow generated by ventilation means 21 and configured to direct said airflow towards the supports 5 so that when the supports 5 and the preforms 8 inserted therein are at duct 11, flanked by the duct 11 or below duct 11. at least the supports 5 are hit by said airflow which exits from the duct 11.

The airflow in particular hits at least the fins 51 of the supports 5.

Duct 11 preferably is configured to direct said airflow towards the supports 5 and towards the preforms 8 inserted in the supports 5.

In particular, when the supports 5 and the preforms 8 inserted therein are at duct 11, in particular when the supports 5 flank the duct 11 or are below the duct 11, the supports 5 and the preforms 8 inserted in the supports 5 are hit by the airflow. More in detail, preferably, part of the airflow hits the preforms 8, in particular it enters the preforms 8, and part of the airflow hits the supports 5.

Duct 11 preferably extends along said path, in particular so that a plurality of supports 5 is adapted to be at duct 11, in particular so that a plurality of supports 5 is adapted to be flanked by the duct 11 or below duct 11.

In other words, a plurality of supports 5 can simultaneously be at a same duct 11.

Duct 11 in particular extends parallel to said path, more specifically parallel to a part of said path.

The longitudinal axis of duct 11, which may comprise one or more curved stretches, in particular extends parallel to said path, more particularly parallel to a part of said path.

Duct 11 preferably has a greater width with respect to the inner diameter of cavity 52 of each support 5.

Duct 11 in particular extends parallel to said path.

The cooling apparatus 9 in particular is configured so that duct 11 extends transversely with respect to the axes Y about which extend the cavities 52 of the supports 5 at duct 11, in particular below duct 11.

The cooling apparatus 9 preferably is configured so that duct 11 is outside, in particular completely outside and more specifically always outside, the preforms 8 inserted in the supports 5 when the supports 5 are at duct 11, in particular flanked by duct 11 or below duct 11.

Duct 11 preferably comprises a plurality of openings 121, 122, 123, preferably a plurality of holes, adapted to direct said airflow towards the supports 5 and preferably also towards the preforms 8 inserted in the supports 5.

The cooling apparatus 9 preferably is configured so that said openings 121, 122, 123 of duct 11 are outside, in particular always outside, the preforms 8 inserted in the supports 5 when the supports 5 are at duct 11, in particular flanked by duct 11 or below duct 11.

Duct 11 preferably is fixed in position.

The supports 5 advantageously allow the preforms to be cooled in an optimal manner, in particular by conduction, and allow the preforms to avoid being deformed. The fins 51, or cooling fins, advantageously allow an effective cooling of the supports 5.

Each support 5 preferably comprises a cavity 52, in particular one cavity 52 only (as in the embodiment shown), also if it may be provided for each support 5 to comprise a plurality of cavities 52, for example two, three or four cavities 52.

The supports 5 preferably are made of metal.

The supports 5 will be further described.

The cooling apparatus 9 preferably comprises a chain 7 or a movable belt to which the supports 5 are fixed to be moved along said path. Chain 7 preferably comprises a plurality of elements, e.g. links, which are articulated to one another.

As already mentioned, the cooling apparatus 9 preferably comprises a duct 11 adapted to receive an airflow generated by ventilation means 21 and to direct said airflow towards the supports 5. In particular, when the preforms 8 and the supports 5 are at duct 11, duct 11 is configured to direct the airflow towards the supports 5 and preferably also towards the preforms 8 inserted in the supports 5. Optionally more than one duct is provided.

The cooling apparatus 9 preferably comprises a guide 13 adapted to guide the movement of said plurality of supports 5 along said path. In particular, guide 13 is adapted to guide the movement of the chain 7 or of the belt.

Chain 7 is constrained to guide 13 so that chain 7 can move, in particular translate, with respect to guide 13, which remains fixed in position. Being fixed to chain 7, the supports 5 move together with chain 7.

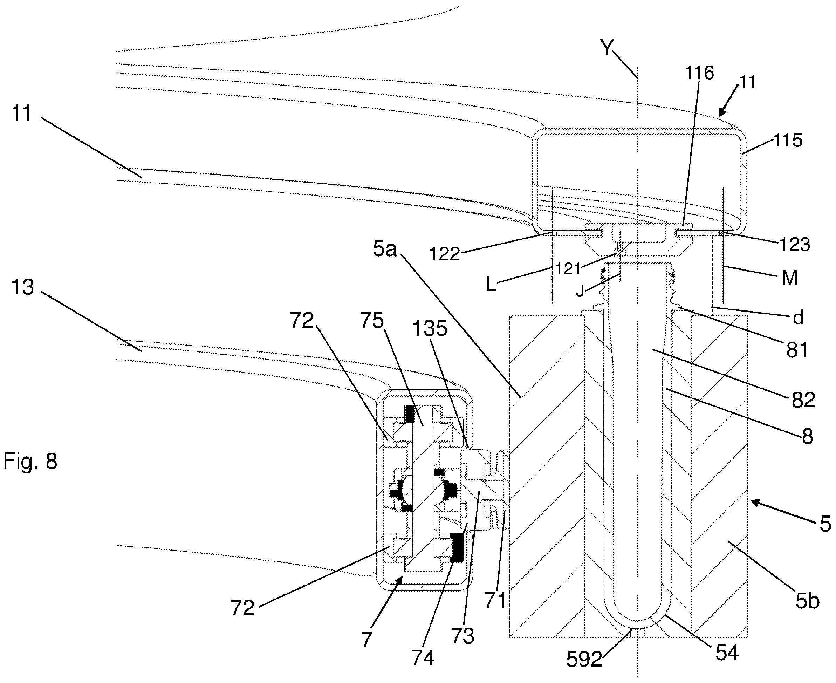

Duct 11 is at guide 13, as shown in particular in Figure 8. Duct 11 in particular at least partially or completely extends along guide 13.

More particularly, guide 13 and duct 11 extend parallel or substantially parallel to each other. Duct 11 preferably at least partially extends above guide 13, and optionally part of duct 11 flanks the guide 13.

Guide 13 preferably is external to duct 11, preferably completely external to duct 11. As already mentioned, when the supports 5 and the preforms 8 inserted therein are at duct 11, for example they flank the duct 11 or are below duct 11, at least the supports 5, preferably the supports 5 and the preforms inserted therein, are hit by an airflow which exits from duct 11. The preforms 8 and the supports 5 therefore are cooled.

Alternatively to chain 7 or to the belt, the supports 5 may also be fastened to the periphery of a wheel. In this case, a duct which directs the airflow towards the supports may be provided at the periphery of the wheel.

The cooling apparatus 9 preferably comprises a device 3, in particular a transfer device, adapted to insert the preforms 8 to be cooled into the supports 5 and to extract the cooled preforms 8 from the supports 5.

Device 3 in particular is adapted to insert each preform 8 into a respective support 5 and to extract each cooled preform 8 from the respective support 5.

Device 3 preferably comprises a wheel 31 adapted to rotate about an axis Z.

Axis Z preferably is a vertical axis, i.e. an orthogonal axis with respect to the support plane of device 3 or more generally, of the cooling apparatus 9.

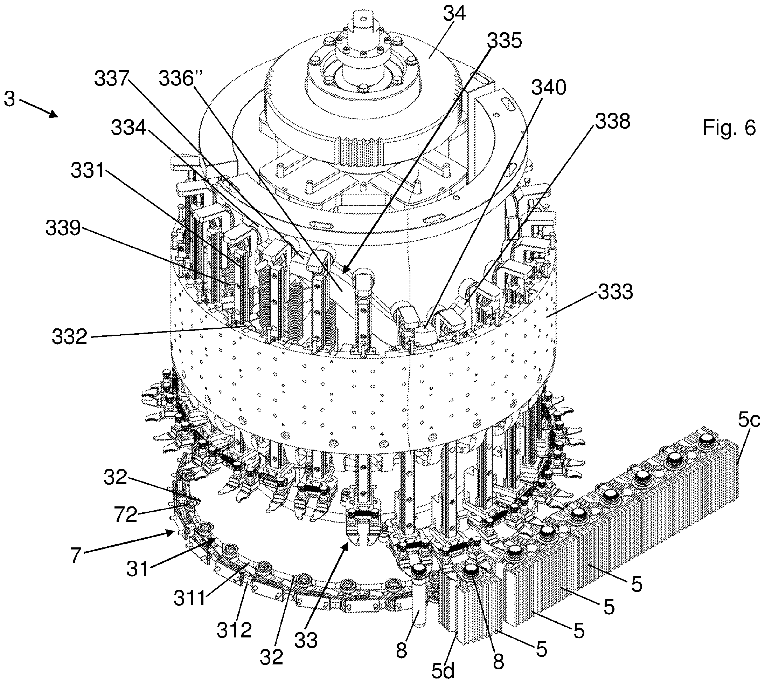

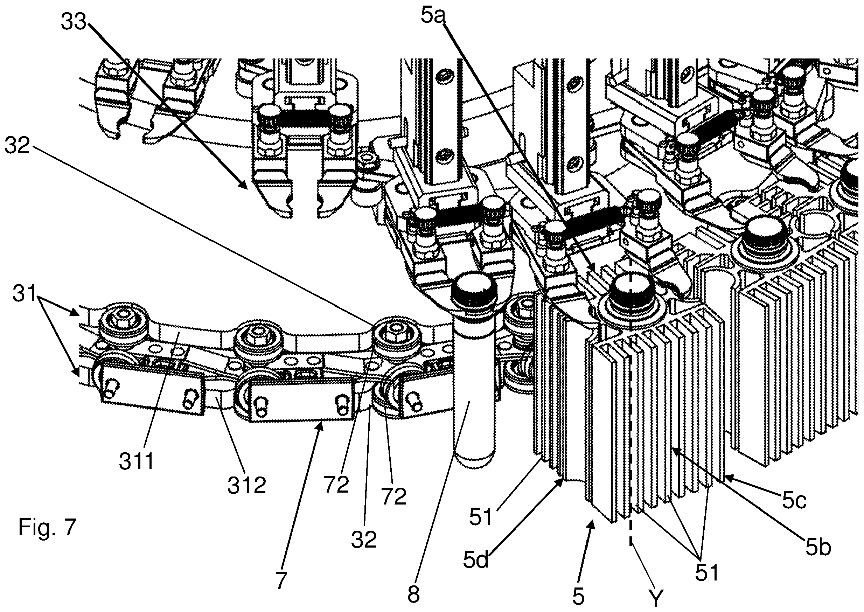

Chain 7 is engaged with wheel 31 so as to be moved by wheel 31 during the rotation of wheel 31. With particular reference to Figures 6 and 7, for example chain 7 is engaged with a peripheral portion, i.e. a portion of the periphery, of wheel 31. In particular, it is preferable that the periphery of wheel 31 is provided with a plurality of recesses 32, or indentations, and that the chain 7 is engaged with such recesses 32. Chain 7 may for example be provided with a plurality of followers, for example a plurality of rollers 72. According to the relative position between wheel 31 and chain 7, certain rollers 72 are engaged with a respective recess 32 and other rollers 72 are engaged with the guide 13. The rollers 72 engaged with wheel 31 may then be disengaged from wheel 31 to be engaged with guide 13, as shown, for example in Figure 8. Then the rollers 72 may be disengaged from guide 13 and can be engaged again with wheel 31.

Wheel 31 preferably comprises an upper part 311 and a lower part 312 which are parallel to and spaced apart from each other, each provided with a plurality of recesses 32. Each recess 32 of the upper part 311 is aligned with a respective recess 32 of the lower part 312 along an axis which is parallel to axis Z. In the particular example shown, chain 7 comprises a plurality of pairs of rollers 72 and each pair of rollers 72 may be engaged with a respective pair of aligned recesses 32.

The portion of the periphery of wheel 31 engaged with chain 7 preferably is distal from duct 11.

Wheel 31 substantially is a motion transmission element.

The rotation of wheel 31 may be implemented, for example, by means of a motor, preferably an electric motor. The motor (not shown), for example may be connected to the toothed pulley 34 of device 3 by means of a drive belt (not shown). The toothed pulley 34 is adapted to rotate about axis Z and transfers the rotation motion to other parts of device 3, in particular to drum 333 and wheel 31.

Device 3 also comprises a plurality of gripping means 33. Each of the gripping means 33 is adapted to arrange a respective preform 8 to be cooled in a respective cavity 52 of a respective support 5 and to extract a respective cooled preform 8 from the respective cavity 52.

The gripping means 33 preferably are adapted to translate parallel to axis Z. Furthermore, it is preferable that the gripping means 33 can rotate integrally with wheel 31.

A downwards movement is needed for the insertion of the preforms 8 and an upwards movement is needed for the extraction of the preforms 8.

The gripping means 33 preferably are arranged along a circumference, preferably along a circumference which is coaxial to wheel 31, i.e. having the center on axis Z. It is preferable that the gripping means 33 are substantially at the periphery of wheel 31 and that they to protrude radially outwardly with respect to the periphery of wheel 31. Further, the gripping means 33 preferably are above wheel 31.

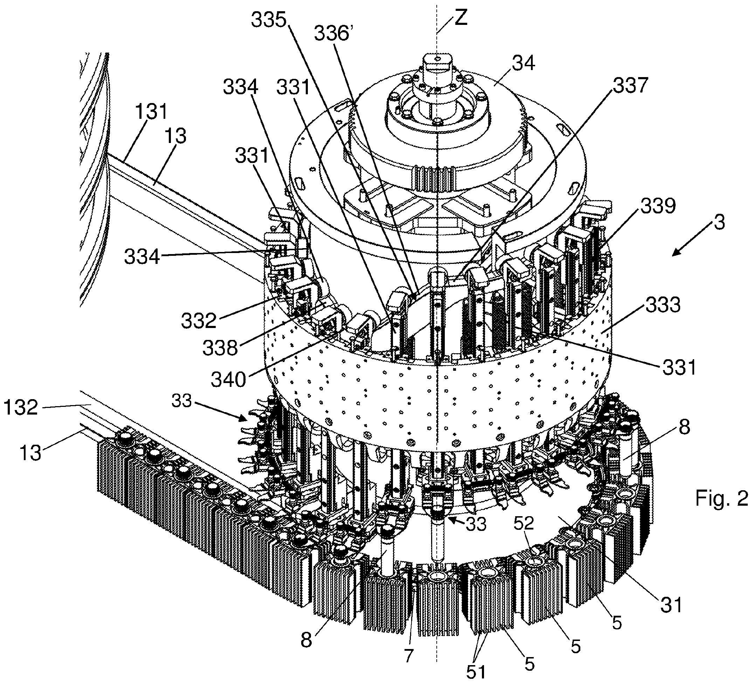

By way of explanation and not by way of limitation, with particular reference to Figures 2 and 6, the gripping means 33 each are provided with a respective movable part 331 inserted in a respective sliding guide 332. The movable part 331 may slide with respect to the sliding guide 332, translating parallel to axis Z with respect to the sliding guide 332. The sliding guide 332 is integrally fastened to an annular support or drum 333, which is adapted to rotate integrally with wheel 31. The movable part 331, the sliding guide 332 and drum 333 are integral with one another, in particular, they can rotate integrally.

Each movable part 331 is provided with a respective follower, for example a respective roller 334 which, for example, is fastened to an upper end portion of the movable part 331. Device 3 comprises a guide 335, or cam, fastened in position, with which the rollers 334 of the movable parts 331 are engaged. Guide 335 comprises an upper stretch 337 (distal from wheel 31) and a lower stretch 338 (proximal to wheel 31), which partially extend about axis Z and are arranged over two different planes. The upper stretch 337 and the lower stretch 338 are joined by two inclined connection stretches 336', 336", which preferably are opposite to each other, of which one connection stretch 336' is shown, for example in Figure 2, and the other connection stretch 336" is shown, for example in Figure 6. There is provided a respective depression 340, preferably corresponding to the lowest zone of guide 335, between each of the inclined stretches 336', 336" and the lower stretch 338.

During the rotation of wheel 31, following the path defined by the fixed guide 335, the movable parts 331 - and thus the gripping means 33 constrained thereto - can rotate about axis Z and, according to the shape of guide 335, move upwards or downwards with respect to axis Z. In particular, when roller 334 of a movable part 331 is at one of the depressions 340, the gripping means 33 are in the lowermost position thereof in which they release or grip preform 8, according to the function to be carried out.

To ensure the contact between the rollers 334 and guide 335 also at increased rotation speeds, preferably elastic return means are provided, for example springs 339. For example, a spring 339 is provided, constrained to each movable part 331 and to drum 333.

It must be clear that guide 335 may also have other shapes with respect to the one described.

It must also be clear that the translation mode of the gripping means 33 may also occur in other manners.

Each of the gripping means 33 preferably comprises or is formed by a gripper 33.

Each gripper 33 preferably is adapted to grasp a respective preform 8 at the neck of the preform. In particular, it is preferable that each gripper 33 can grasp the support ring 81 of preform 8 or a zone above or below the support ring 81. Generally, the neck of the preform delimits the opening of the preform and comprises the threaded portion (if provided) of the preform.

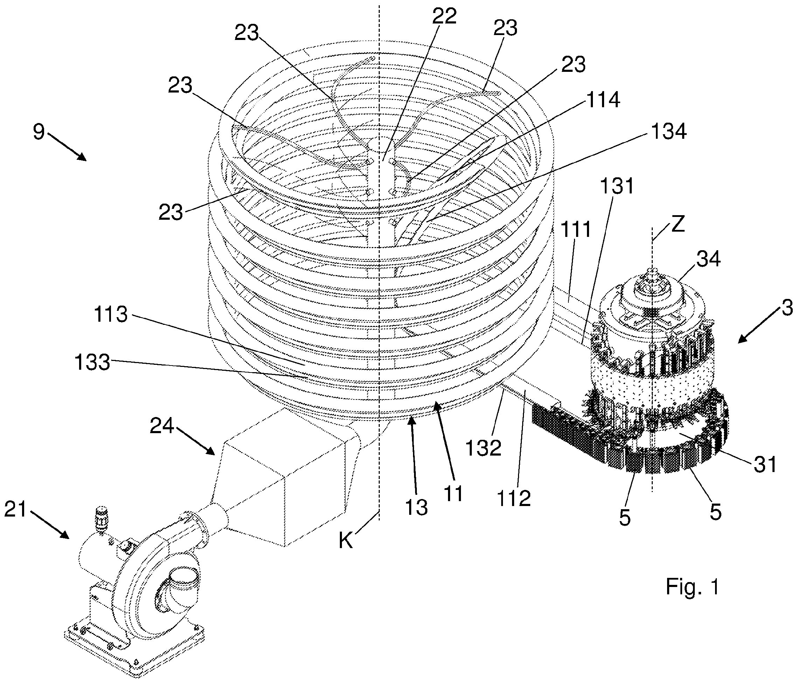

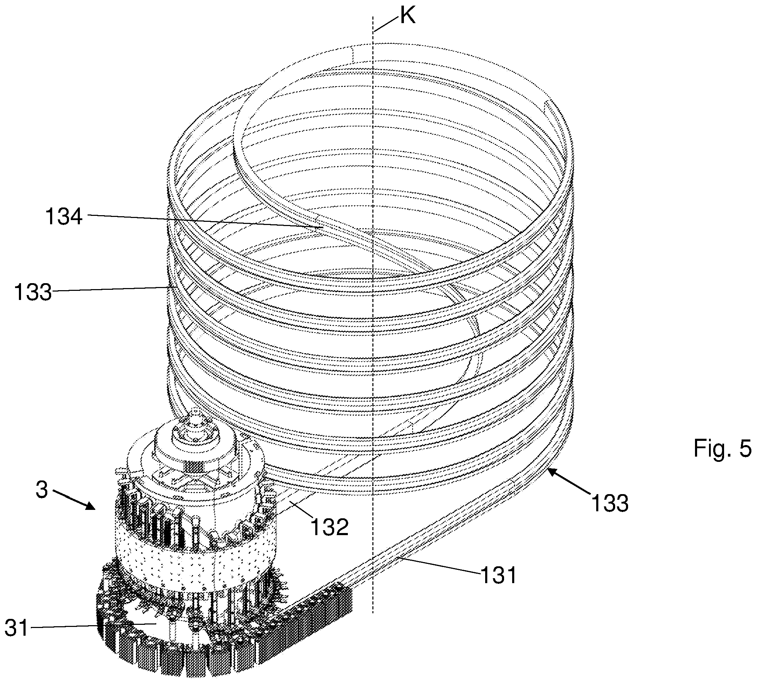

With particular reference to Figures 1 and 5 (where duct 11 is not shown in Figure 5 for reasons of increased illustrative clarity), guide 13 comprises an initial stretch 131, preferably a rectilinear initial stretch, and a final stretch 132, preferably a rectilinear final stretch.

The initial stretch 131 and the final stretch 132 preferably are parallel or substantially parallel to each other.

The initial stretch 131 and the final stretch 132 are close to a respective peripheral portion of wheel 31. The initial stretch 131 and the final stretch 132 in particular are close to a preform insertion zone and a preform extraction zone, respectively. Preferably, the initial stretch 131 and the final stretch 132 are substantially opposite to each other with respect to a diameter of wheel 31, preferably with respect to the diameter which is parallel to the initial stretch 131 and to the final stretch 132. Guide 13 comprises, adjacent to the initial stretch 131, a curved, preferably helicoidal, stretch which extends about an axis K, preferably a vertical axis, which is spaced apart from the aforesaid axis Z of device 3. The curved stretch 133 preferably extends upwards from the initial stretch 131, i.e. in distal direction with respect to the support plane of the cooling apparatus 9. A descending stretch 134 is provided adjacent to the curved stretch 133, in particular adjacent to the highest spiral of the curved stretch 133, the descending stretch partially extending in the spirals of the curved stretch 133, in particular in the space delimited by said spirals. The descending stretch 134 joins to the final stretch 132.

Duct 11 preferably comprises at least one curved stretch 113.

In particular, similarly to guide 13, also duct 11 preferably comprises an initial stretch 111 (Figure 1); a final stretch 112; a curved, preferably helicoidal, stretch 113 which extends about axis K; and a descending stretch 114 which extends in the spirals formed by the curved stretch 113.

The initial stretch 111, the final stretch 112, the curved, preferably helicoidal stretch 113, and the descending stretch 114 of duct 11 preferably are parallel to the initial stretch 131, the final stretch 132, the curved, preferably helicoidal stretch 133, and the descending stretch 134, respectively, of guide 13.

The relative position between duct 11 and guide 13 preferably is such that duct 11 is at a greater height with respect to guide 13, in particular with respect to the corresponding stretch of guide 13, as shown in Figure 8 in particular. Thereby, the airflow output from duct 11 that hits the supports 5 and preferably also the preforms 8, substantially is directed from the top downwards. Optionally, the descending stretches 114 and 134 are arranged adjacent to each other at least for a portion, as shown in Figure 1, for example, instead of being on top of each other.

In the embodiment shown in the Figures, duct 11 preferably is displaced externally with respect to guide 13 (see Figure 8 in particular). Guide 13 laterally flanks the supports 5, which are below duct 11. Preferably, the distance "d", in particular the minimum distance, between duct 11 and the supports 5 therebelow, is comprised between 10 and 80 mm. Such a distance preferably has a constant or substantially constant value, for example with a tolerance of ± 40%.

The supports 5 are arranged in sequence along chain 7, preferably along the whole chain 7.

Chain 7 preferably is at least partially arranged inside the guide 13, as shown in Figure 8. Indeed, guide 13 preferably is hollow and preferably has a C-shaped section. Guide 13 in particular has a longitudinal opening 135 facing the supports 5. Opening 135 is crossed by chain 7. Chain 7 in particular comprises connection portions 71, each fastened to a respective support 5. The connection portion 71 preferably is external to guide 13. Each connection portion 71 is constrained to a respective pin 73. Each pin 73 is constrained to a respective roller 74, which may rotate about the respective pin 73. Roller 74 is adapted to come into contact with the edges of guide 13 delimiting opening 135.

As already mentioned, chain 7 preferably is also provided with a plurality of rollers 72 adapted to be arranged inside the guide 13. When they are in guide 13, the rollers 72 are in contact with the inner wall of guide 13, and therefore they guide the movement of chain 7 with respect to guide 13 together with the rollers 74. The rollers 72 are constrained to a respective pin 75 and are adapted to rotate about pin 75. In a particular embodiment, two rollers 72 are constrained to each pin 75, as shown in Figure 8.

The rotation axis of the rollers 72 is transverse, preferably orthogonal, to the rotation axis of the rollers 74.

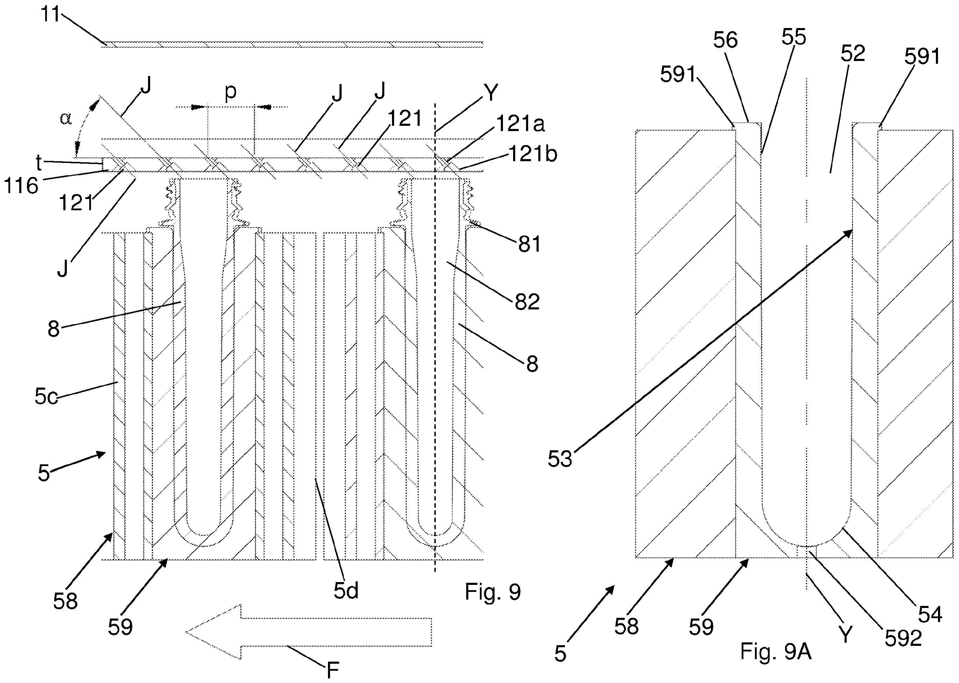

Preferably, as already mentioned, duct 11 comprises a plurality of openings, in particular of holes 121, 122, 123 (Figures 8 and 9), facing the supports 5 and preferably also the preforms 8 in the supports 5, which are adapted to direct the airflow which exits from duct 11. The openings, for example the holes 121, 122, 123, preferably are obtained in a lower portion of duct 11, in particular in a portion delimiting duct 11.

Alternatively or additionally to the holes, openings of different shape, e.g. slots, may also be provided.

Preferably, there is provided a plurality of openings or holes 122, 123 adapted to be at the supports 5 which are at duct 11, and a plurality of openings 121 or holes adapted to be at the preforms 8 inserted in the supports 5 which are at duct 11. The holes 121 preferably are arranged according to a row, which for descriptive purposes is called first row of holes 121.

The holes 121 preferably are arranged so that when the supports 5 containing the preforms 8 are displaced along the path, in particular along guide 13, and are at the duct, for example below duct 11, the holes 121 of the first row of holes may be at the preforms 8, preferably at cavity 82 defined by the preforms 8. According to the relative position between each support 5 and duct 11, the holes 121 may direct the airflow towards the preforms 8 or towards the front 5c or back 5d (with respect to the advancement direction F) of the supports 5.

The holes 121 preferably are arranged so that axis J of each hole 121 does not coincide, in particular never coincides, with axis Y about which the cavity 52 of the supports 5 extends, in particular about which the wall or side surface of each cavity 52 (Figure 9a) extends. Axis J is the axis about which the wall delimiting each hole 121 extends. Axis Y preferably coincides with the axis about which each cavity 82 of the preforms 8 extends.

For example, axis J of each hole 121 may substantially be parallel to and spaced apart from axis Y; or axis J of each hole 121 may be inclined and spaced apart with respect to axis Y, as shown in Figure 9. In this latter case, axis J forms an angle α preferably comprised between 10 and 80° or between 30° and 60° with respect to axis Y, for example equal to about 45°. In other words, axis J is inclined, with an angle other than 90°, with respect to the axis along which duct 11 extends. Advantageously, an airflow is created in the preforms 8 which allows an optimal cooling to be obtained.

Axis J preferably has a negative angular coefficient with respect to the advancement direction (arrow F) of the supports 5 (Figure 9).

Pitch "p" between the holes 121, i.e. the minimum distance between corresponding points of each hole 121 and the successive hole 121, preferably is comprised between 10 and 100 mm.

Each hole 121 preferably is delimited by a portion of wall 121a which is proximal to the inside of the duct 11, and by a portion of wall 121b which is distal from the inside of duct 11, adjacent to the portion of wall 121a; and wall 121a has a smaller inner diameter with respect to the diameter of wall 121b. These features allow an optimal diffusion of the airflow output from the holes 121.

The holes 122, 123 facing the supports 5 preferably are arranged according to a respective row, i.e. there are provided a second row of holes 122 and a third row of holes 123.

The holes 122 in particular are adapted to cool the side wall 5a of each support 5 proximal to guide 13; and the holes 123 are adapted to cool the side wall 5b of each support 5 distal from guide 13.

Preferably, the first row of holes 121 is arranged between the second row of holes 122 and the third row of holes 123. In particular, the axis along which the holes 122 of the second row of holes are aligned and the axis along which the holes 123 of the third row of holes are aligned preferably are opposite to each other with respect to the axis along which the holes 121 of the first row of holes are aligned. Note that such alignment axes substantially follow the shape of duct 11 and therefore may comprise curved portions.

Preferably, each hole 122 defines an axis L (Figure 8) and each hole 123 defines an axis M. In other words, each hole 122 is delimited by a wall which extends about axis L and each hole 123 is delimited by a wall which extends about an axis M. Preferably, each axis L and each axis M substantially is parallel to axis Y about which each cavity 52 of each support 5 extends, in particular of each support 5 which is at, for example below, duct 11.

Duct 11 preferably comprises a part 115 (Figure 8) having C-shaped section. Duct 11 also comprises a part 116, preferably a plate-shaped part, fastened to part 115 and which occupies the opening of part 115.

Part 116 preferably is made of plastic.

Part 116 preferably is formed by a plurality of sub-parts arranged in sequence and adjacent to one another.

The holes 121 are obtained in part 116. Thickness "t" (Figure 9) of part 116 preferably is such that the walls delimiting the holes 121 may cause a flow which is transverse with respect to axis Y.

For this purpose, part 116 preferably has a thickness t comprised between 1 and 20 mm, for example between 3 and 20 mm.

The holes 122 and 123 preferably are obtained in the portions of part 115 which flank part 116.

The ventilation means adapted to generate the cooling airflow preferably comprise a blower 21 (Figure 1).

Blower 21 is connected to duct 11 by means of a duct 22. Duct 22 preferably at least partially extends in the space delimited by the spirals of the curved, preferably helicoidal, stretch 113. Preferably, the stretch of duct 22 which extends in said space delimited by the spirals is substantially vertical, in particular parallel, to axis K, for example coaxial to axis K. Duct 22 is connected to duct 11 by means of a plurality of distribution ducts 23. Preferably, at least one distribution duct 23, for example four distribution ducts 23, is provided for each spiral of the curved (preferably helicoidal) stretch 113. The distribution ducts 23 for example, are flexible tubes. Preferably, when two or more distribution ducts 23 are provided, the coupling areas of the distribution ducts 23 in each spiral are equally spaced apart from one another. Preferably, an air-water exchanger 24 is provided between blower 21 and duct 22. The air-water exchanger 24, or condenser, in particular serves to dehumidify the air to be directed towards the supports 5, and preferably to cool it.

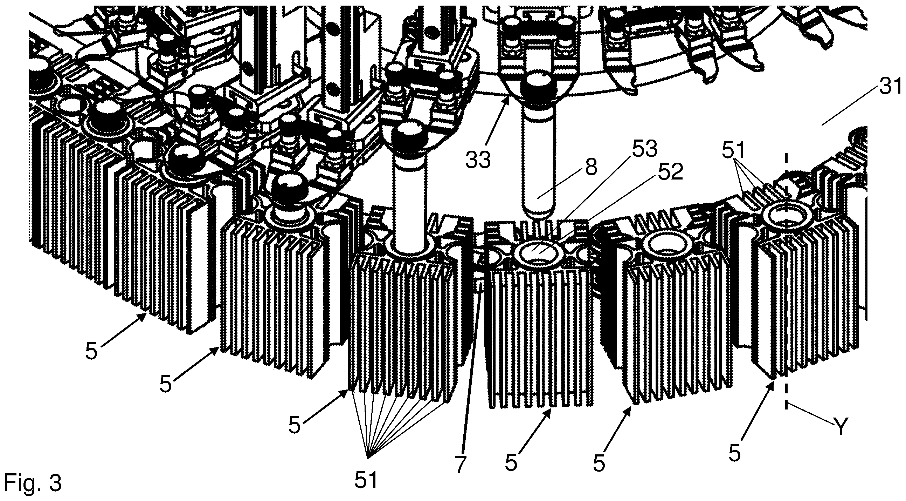

With reference to the supports 5, and with particular reference to Figures 3, 7, 8, 9 and 9A, the cavity 52 preferably is provided in a central area of each of the supports 5.

Each support 5 comprises a first side 5a (Figure 7) or side part which, according to the position of support 5, is adapted to be proximal to wheel 31 (when provided), in particular to face the wheel 31. In the embodiment shown in the Figures, the first side 5a is also adapted to be proximal to guide 13 (when provided), in particular to face the guide 13, according to the position of support 5.

The opposite side of the first side 5a is called second side 5b for descriptive purposes.

At least the first side 5a and the second side 5b each are provided with a plurality of fins 51.

The holes 122 (when provided) of duct 11 are adapted to direct the airflow towards the first side 5a, and the holes 123 (when provided) are adapted to direct the airflow towards the second side 5b.

A front side 5c, a rear side 5d with respect to the advancement direction F of the supports 5, are contiguous to the first side 5a and to the second side 5b. The front side 5c and the rear side 5d are opposite to each other.

Also the front side 5c and/or the rear side 5d preferably are each provided with one or more fins 51.

The greater extension, i.e. the height, of each fin 51 preferably extends parallel to axis Y (Figure 3). The fins 51 preferably have the same height. The height of the fins 51 preferably defines the maximum height of support 5.

Each cavity 52 is provided with an upper opening, i.e. adapted to be proximal to duct 11. Wall 53 which delimits the cavity 52 comprises a bottom 54 (Figure 9A) and a surface, in particular a side surface 55, adjacent to bottom 54. The side surface 55 extends about axis Y and is adapted to come into contact with the outer side surface of the preform 8. Surface 55 in particular is substantially cylindrical or substantially conical, tapered towards bottom 54, according to the shape of the outer side surface of preform 8 to be inserted into cavity 52.

Bottom 54 (Figure 9A) of cavity 52 is opposite to said opening of cavity 52, and thus is adapted to be in distal position with respect to duct 11 (when provided). Bottom 54 preferably is concave towards the opening of cavity 52, for example is substantially spherical cap-shaped.

Bottom 54 optionally comprises an indentation or an opening 592 adapted in particular to receive the protuberance of the bottom of preform 8 which is at the injection point.

Cavity 52 preferably is sized so that bottom 54 is adapted to abut against the bottom of the respective preform 8.

Further, or alternatively, the upper surface 56 of support 5 surrounding cavity 52 is adapted to abut with the lower surface of the support ring 81 of preform 8.

In other words, support 5 may be configured to have one abutment area only, in particular an axial abutment area, with preform 8, i.e. bottom 54 or said upper surface 56 of support 5; or two abutment areas with preform 8, i.e. bottom 54 and said upper surface 56 of support 5.

Each support 5 preferably comprises an outer part 58 (Figures 9 and 9A) provided with said fins 51; and an inner part 59, or insert, provided with said cavity 52.

The inner part 59 is arranged in the outer part 58 and is extractable from the outer part 58.

Thereby, the supports 5 may advantageously be adapted according to the sizes of the preforms to be cooled.

The inner part 59 preferably comprises an annular upper edge 591 which is adapted to abut with an upper surface of the outer part 58 of support 5.

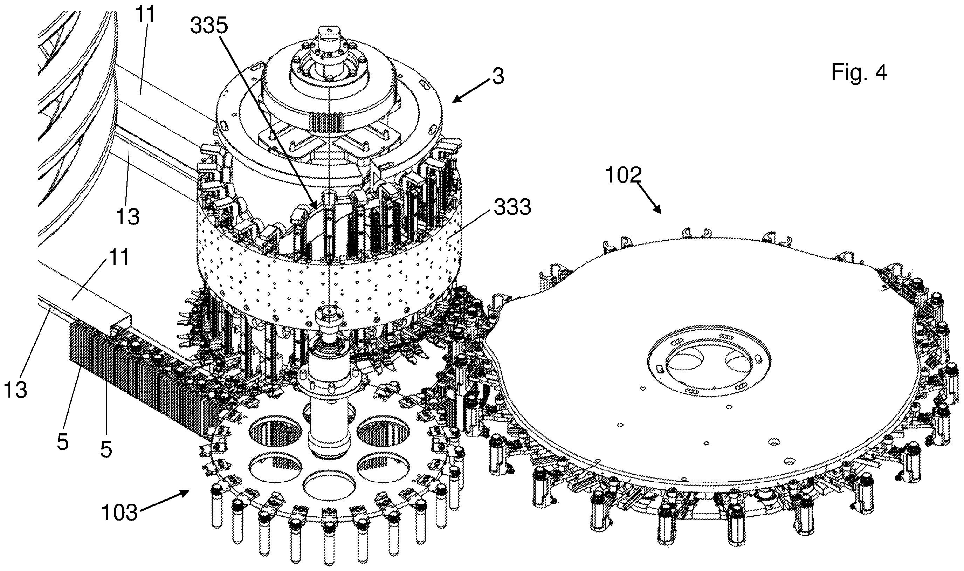

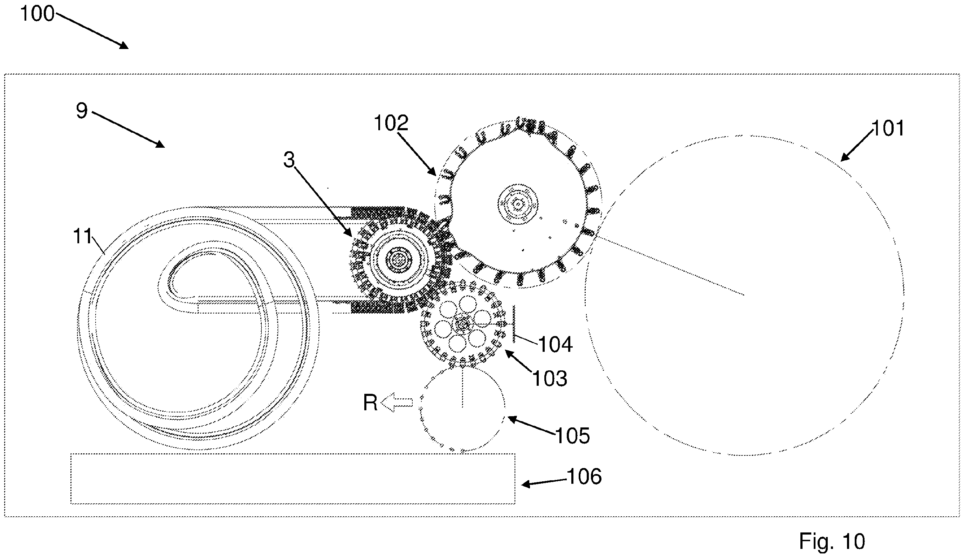

With particular reference to Figure 10 and to Figure 4, the cooling apparatus 9 preferably is part of a system 100, in particular a system 100 for producing preforms. System 100 thus comprises a molding apparatus 101 (diagrammatically shown in Figure 10) for producing the preforms. The molding apparatus 101 preferably is of the injection or injection-compression type and preferably is of the rotary type. The molding apparatus 101 is arranged upstream of the cooling apparatus 9. One or more transfer wheels are provided between the molding apparatus 101 and the cooling apparatus 9, for example one transfer wheel 102, for transferring the preforms from the molding apparatus 101 to the cooling apparatus 9. The gripping means 33 in particular are adapted to grasp and pick the preforms from the transfer wheel 102.

System 100 preferably also comprises cooled preform inspection means 104 preferably arranged upstream of the cooling apparatus 9. The inspection means 104, for example may be arranged close to a transfer wheel 103 adapted to pick the preforms 8 from the gripping means 33 of device 3, in particular to pick the cooled preforms 8.

The inspection means 104 preferably comprise one or more cameras. The inspection means 104 are configured to recognize possible defects in the cooled preforms, for example possible crystallization defects. The inspection means 104 preferably comprise electronic storage means on which an electronic control unit saves the position in the transfer wheel 103 of the preforms to be rejected. Preferably, another wheel 105 adapted to pick the preforms from wheel 103 is provided downstream of wheel 103.

The preforms deemed unsuitable by the inspection means 104 are unloaded by wheel 105, as diagrammatically indicated by the white arrow R. The preforms deemed suitable instead are transferred by wheel 105 to a conveyor belt 106. Preferably, a same motor is provided which causes the rotation, by means of a drive belt, of wheel 103, wheel 105 and device 3, in particular of the wheel 31 thereof. Preferably, wheel 101 and wheel 102 may rotate being actuated by a respective motor.

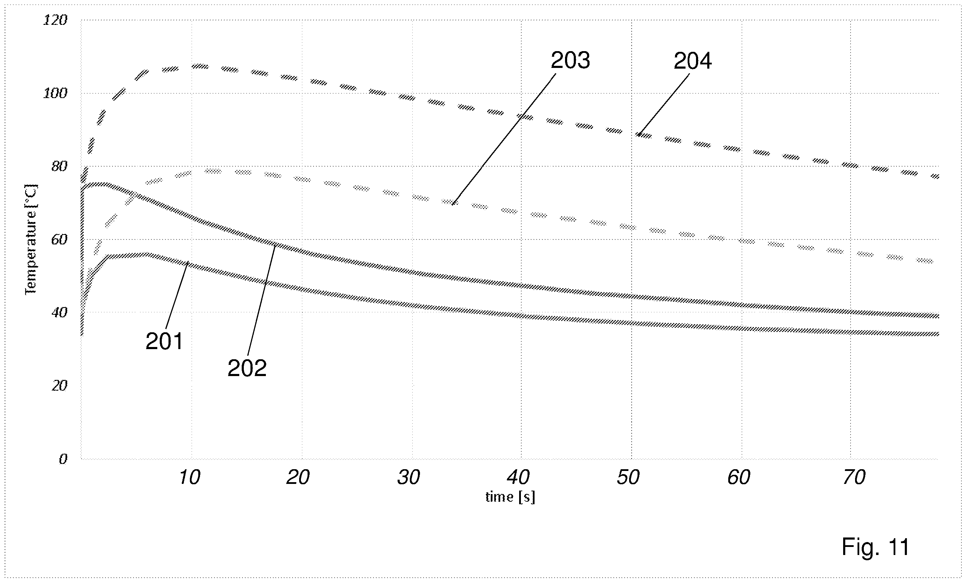

The advantages of a cooling apparatus 9 in accordance with the invention may be better appreciated from the results shown in Figure 11.

Figure 11 shows four curves, of which the two continuous curves 201, 202 show the trend over time (s) of the external and internal temperature (°C), respectively, of a preform cooled by means of apparatus 9 in accordance with the invention, and the two dotted curves 203, 204 show the trend over time of the external and internal temperature, respectively, of a preform cooled by means of a comparison apparatus.

The curves were obtained by means of an accurate simulation, in particular by means of Ansys^{®} software. In the simulation, the preforms had the same features. The comparison apparatus in particular was not provided with the supports 5 and cooled the preforms only by convection.

In both cases, the zero time corresponds to the time when the preform is extracted from the mold with which it was produced.

The initial increase in temperature shown in all the curves is due to the transfer of heat from the core, i.e. from the area comprised between the inner and outer surface of the preform towards the outer and inner surface.

Indeed, during the molding, the outer and inner surface were in contact with metal surfaces of the mold and, therefore, they had a lower temperature with respect to the core.

By comparing the curves 201 and 203, related to the outer surface, it is noted how the initial increase in temperature advantageously is much less in curve 201. Indeed, the preform is inserted into support 5 and thus the outer surface of the preform comes into contact with a colder surface, i.e. the inner surface 53 of support 5. Thus, there advantageously is a cooling by conduction.

The temperature of the outer surface of a preform cooled by means of apparatus 9 of the invention generally is much lower with respect to the temperature of the outer surface of the preform cooled by means of the comparison apparatus.

By comparing the curves 202 and 204 related to the inner surface, it is also noted in this case that the initial increase in temperature advantageously is much lower in curve 202 and that the temperature of the inner surface of a preform cooled by means of the apparatus of the invention generally is much lower with respect to the temperature of the inner surface of the preform cooled by means of the comparison apparatus.

The invention is defined in the appended claims.

## Claims

1. An apparatus (9) for cooling preforms (8), in particular preforms of bottles, made of thermoplastic material comprising
- a plurality of supports (5) for the preforms (8) adapted to be moved along a path;
wherein each support (5) is externally provided with a plurality of fins (51);
and wherein each support (5) comprises at least one cavity (52) adapted to accommodate a respective preform (8);
**characterized in that** the cooling apparatus (9) comprises at least one duct (11) adapted to receive an airflow generated by ventilation means (21) and configured to direct said airflow towards the supports (5) so that when the supports (5) and the preforms (8) inserted therein are at the duct (11), flanked by the duct (11) or below the duct (11), at least the supports (5) are hit by said airflow which exits from the duct (11).

2. A cooling apparatus (9) according to claim 1, wherein said duct (11) extends along said path, in particular so that a plurality of supports (5) is adapted to be at the duct (11), in particular flanked by the duct (11) or below the duct (11).

3. A cooling apparatus (9) according to claim 1 or 2, wherein the duct (11) is outside the preforms (8) inserted in the supports (5) when the supports (5) are at the duct (11), in particular placed flanked by the duct (11) or below the duct (11).

4. A cooling apparatus (9) according to any one of the preceding claims, wherein the duct (11) comprises at least one curved stretch (113).

5. A cooling apparatus (9) according to any one of the preceding claims, wherein the duct (11) comprises a plurality of openings, preferably a plurality of holes (121, 122, 123), adapted to direct said airflow towards the supports (5) and preferably also towards the preforms (8) inserted in the supports (5).

6. A cooling apparatus (9) according to any one of the preceding claims, wherein the duct (11) comprises at least one row of openings, in particular holes (121, 122, 123), adapted to direct said airflow towards the supports (5), preferably three rows of openings (121, 122, 123), of which a first row of openings (121) being arranged between a second row of openings (122) and a third row of openings (123), preferably wherein each opening (121) of the first row of openings defines an axis (J) which is inclined with respect to the axis along which the duct (11) extends.

7. A cooling apparatus (9) according to any one of the preceding claims, comprising a guide (13) adapted to guide the movement of said plurality of supports (5) along said path; wherein said guide (13) and said duct (11) at least partially extend parallel to each other, preferably wherein the duct (11) at least partially extends above the guide (13).

8. A cooling apparatus (9) according to claim 7, comprising motion transmission means (7) to which the supports (5) are constrained in order to be moved along said path; in particular wherein said motion transmission means (7) are constrained to the guide (13).

9. A cooling apparatus (9) according to any one of the preceding claims, comprising a movable chain (7) or a movable belt to which said supports (5) are fastened to be moved along said path; and wherein a guide (13) adapted to guide the movement of said chain (7) or said belt is provided.

10. A cooling apparatus (9) according to claim 9,
wherein said guide (13) and said duct (11) at least partially extend parallel to each other;
wherein the duct (11) at least partially extends above the guide (13);
preferably wherein said duct (11) and said guide (13) each comprise a respective curved stretch (113, 133) extending about an axis (K), said respective curved stretch (113, 133) preferably being helicoidal.

11. A cooling apparatus (9) according to any one of the preceding claims, comprising a device (3) configured to insert the preforms (8) to be cooled into said cavities (52) and extract the cooled preforms (8) from said cavities (52), said device (3) preferably being adapted to rotate.

12. A cooling apparatus (9) according to claim 11, wherein said device (3) comprises a wheel (31) adapted to rotate about an axis (Z);
wherein a movable chain (7) or a movable belt is provided, to which said supports (5) are fastened to be moved along said path;
and wherein said movable chain (7) or movable belt is engaged with the wheel (31) in order to be moved by the wheel (31).

13. A cooling apparatus (9) according to claim 11 or 12, wherein the device (3) comprises a plurality of gripping means (33) for gripping the preforms (8); each of the gripping means (33) being adapted to arrange a respective preform (8) in a respective cavity (52) and extract a respective preform (8) from the respective cavity (52);
preferably wherein said gripping means (33) are adapted to be displaced for inserting the preforms (8) to be cooled into the respective cavity (52) and for extracting the cooled preforms (8) from the respective cavity (52) and/or wherein each of said gripping means (33) comprises a gripper.

14. A cooling apparatus (9) according to claim 11, 12 or 13,
wherein said duct (11) and said guide (13) comprise a respective second stretch (111, 131) which is proximal to a preform insertion zone of the device (3), and a respective stretch (112, 132) which is proximal to a preform extraction zone of the device (3).

15. A cooling apparatus (9) according to claim 14, wherein said duct (11) and said guide (13) each comprise a respective curved stretch (113, 133) which extends about an axis (K), said respective curved stretch (113, 133) preferably being helicoidal; wherein said curved stretch (113, 133) is arranged between said stretch (111, 131) proximal to the insertion zone and said stretch (112, 132) proximal to the extraction zone.

16. A cooling apparatus according to any one of the preceding claims, wherein the cavity (52) is provided with an opening through which a preform (8) can be inserted into the cavity (52);
wherein the cavity (52) is delimited by an inner wall (53) of the support (5);
and wherein said inner wall (53) comprises a side surface (55) and a bottom surface (54) opposite to said opening; preferably wherein each support (5) comprises an outer part (58) provided with said fins (51);
and an inner part (59) provided with said cavity (52), which is arranged in said outer part (58) and extractable from said outer part (58).

17. A system (100) for producing preforms comprising a cooling apparatus (9) according to any one of the preceding claims; and a molding apparatus (101) for producing the preforms, arranged upstream of the cooling apparatus (9);
and preferably comprising preform inspection means (104) preferably arranged upstream and/or downstream of the cooling apparatus (9).

## Patentansprüche

1. Vorrichtung (9) zum Kühlen von Vorformen (8), insbesondere Vorformen für Flaschen, die aus einem thermoplastischen Material hergestellt sind, umfassend
- eine Vielzahl von Trägern (5) für die Vorformen (8), die dazu geeignet sind, entlang eines Pfads bewegt zu werden; wobei jeder Träger (5) außen mit einer Vielzahl von Rippen (51) versehen ist;
und wobei jeder Träger (5) mindestens einen Hohlraum (52) umfasst, der zur Aufnahme einer jeweiligen Vorform (8) geeignet ist;
**dadurch gekennzeichnet, dass** die Kühlvorrichtung (9) mindestens einen Kanal (11) umfasst, der dazu geeignet ist, einen von Lüftungsmitteln (21) erzeugten Luftstrom aufzunehmen, und dazu ausgelegt ist, den Luftstrom in Richtung der Träger (5) zu leiten, so dass, wenn sich die Träger (5) und die darin eingesetzten Vorformen (8) an dem Kanal (11), von dem Kanal (11) flankiert oder unterhalb des Kanals (11), befinden, mindestens die Träger (5) von dem Luftstrom getroffen werden, der aus dem Kanal (11) austritt.

2. Kühlvorrichtung (9) nach Anspruch 1, wobei sich der Kanal (11) entlang des Pfads erstreckt, insbesondere so, dass eine Vielzahl von Trägern (5) dazu geeignet ist, sich an dem Kanal (11), insbesondere von dem Kanal (11) flankiert oder unterhalb des Kanals (11), zu befinden.

3. Kühlvorrichtung (9) nach Anspruch 1 oder 2, wobei sich der Kanal (11) außerhalb der in die Träger (5) eingesetzten Vorformen (8) befindet, wenn sich die Träger (5) am Kanal (11) befinden, insbesondere vom Kanal (11) flankiert oder unterhalb des Kanals (11) platziert sind.

4. Kühlvorrichtung (9) nach einem der vorhergehenden Ansprüche, wobei der Kanal (11) mindestens einen gekrümmten Abschnitt (113) umfasst.

5. Kühlvorrichtung (9) nach einem der vorhergehenden Ansprüche, wobei der Kanal (11) eine Vielzahl von Öffnungen, vorzugsweise eine Vielzahl von Löchern (121, 122, 123), umfasst, die dazu geeignet sind, den Luftstrom in Richtung der Träger (5) und vorzugsweise auch in Richtung der in die Träger (5) eingesetzten Vorformen (8) zu leiten.

6. Kühlvorrichtung (9) nach einem der vorhergehenden Ansprüche, wobei der Kanal (11) mindestens eine Reihe von Öffnungen, insbesondere Löcher (121, 122, 123), umfasst, die dazu geeignet sind, den Luftstrom in Richtung der Träger (5) zu leiten, vorzugsweise drei Reihen von Öffnungen (121, 122, 123), von denen eine erste Reihe von Öffnungen (121) zwischen einer zweiten Reihe von Öffnungen (122) und einer dritten Reihe von Öffnungen (123) angeordnet ist, wobei vorzugsweise jede Öffnung (121) der ersten Reihe von Öffnungen eine Achse (J) definiert, die in Bezug auf die Achse, entlang der sich der Kanal (11) erstreckt, geneigt ist.

7. Kühlvorrichtung (9) nach einem der vorhergehenden Ansprüche, die eine Führung (13) umfasst, die dazu geeignet ist, die Bewegung der Vielzahl von Trägern (5) entlang des Pfads zu führen; wobei sich die Führung (13) und der Kanal (11) mindestens teilweise parallel zueinander erstrecken, wobei sich der Kanal (11) vorzugsweise mindestens teilweise oberhalb der Führung (13) erstreckt.

8. Kühlvorrichtung (9) nach Anspruch 7, die Bewegungsübertragungsmittel (7) umfasst, an denen die Träger (5) angebracht sind, um entlang des Pfads bewegt zu werden, wobei die Bewegungsübertragungsmittel (7) insbesondere an der Führung (13) angebracht sind.

9. Kühlvorrichtung (9) nach einem der vorhergehenden Ansprüche, die eine bewegliche Kette (7) oder ein bewegliches Band umfasst, an der/dem die Träger (5) befestigt sind, um entlang des Pfads bewegt zu werden; und wobei eine Führung (13) vorgesehen ist, die dazu geeignet ist, die Bewegung der Kette (7) oder des Bandes zu führen.

10. Kühlvorrichtung (9) nach Anspruch 9, wobei sich die Führung (13) und der Kanal (11) mindestens teilweise parallel zueinander erstrecken;
wobei sich der Kanal (11) mindestens teilweise oberhalb der Führung (13) erstreckt;
wobei der Kanal (11) und die Führung (13) vorzugsweise jeweils einen gekrümmten Abschnitt (113, 133) umfassen, der sich um eine Achse (K) erstreckt, wobei der jeweilige gekrümmte Abschnitt (113, 133) vorzugsweise schraubenförmig ist.

11. Kühlvorrichtung (9) nach einem der vorhergehenden Ansprüche, die eine Einrichtung (3) umfasst, die dazu ausgelegt ist, die zu kühlenden Vorformen (8) in die Hohlräume (52) einzusetzen und die gekühlten Vorformen (8) aus den Hohlräumen (52) zu entnehmen, wobei die Einrichtung (3) vorzugsweise dazu geeignet ist, sich zu drehen.

12. Kühlvorrichtung (9) nach Anspruch 11, wobei die Einrichtung (3) ein Rad (31) umfasst, das dazu geeignet ist, sich um eine Achse (Z) zu drehen;
wobei eine bewegliche Kette (7) oder ein bewegliches Band vorgesehen ist, an der/dem die Träger (5) befestigt sind, um entlang des Pfads bewegt zu werden; und wobei die bewegliche Kette (7) oder das bewegliche Band mit dem Rad (31) in Eingriff stehen, um durch das Rad (31) bewegt zu werden.

13. Kühlvorrichtung (9) nach Anspruch 11 oder 12, wobei die Einrichtung (3) eine Vielzahl von Greifmitteln (33) zum Greifen der Vorformen (8) umfasst; wobei jedes der Greifmittel (33) dazu geeignet ist, eine jeweilige Vorform (8) in einem jeweiligen Hohlraum (52) anzuordnen und eine jeweilige Vorform (8) aus dem jeweiligen Hohlraum (52) zu entnehmen;
wobei die Greifmittel (33) vorzugsweise dazu geeignet sind, zum Einsetzen der zu kühlenden Vorformen (8) in den jeweiligen Hohlraum (52) und zum Entnehmen der gekühlten Vorformen (8) aus dem jeweiligen Hohlraum (52) verschoben zu werden, und/oder wobei jedes der Greifmittel (33) einen Greifer umfasst.

14. Kühlvorrichtung (9) nach Anspruch 11, 12 oder 13,
wobei der Kanal (11) und die Führung (13) einen jeweiligen zweiten Abschnitt (111, 131), der sich in der Nähe einer Vorformeinsetzzone der Einrichtung (3) befindet, und einen jeweiligen Abschnitt (112, 132) umfassen, der sich in der Nähe einer Vorformentnahmezone der Einrichtung (3) befindet.

15. Kühlvorrichtung (9) nach Anspruch 14, wobei der Kanal (11) und die Führung (13) jeweils einen jeweiligen gekrümmten Abschnitt (113, 133) umfassen, der sich um eine Achse (K) erstreckt, wobei der jeweilige gekrümmte Abschnitt (113, 133) vorzugsweise schraubenförmig ist; wobei der gekrümmte Abschnitt (113, 133) zwischen dem Abschnitt (111, 131) in der Nähe der Einsetzzone und dem Abschnitt (112, 132) in der Nähe der Entnahmezone angeordnet ist.

16. Kühlvorrichtung nach einem der vorhergehenden Ansprüche, wobei der Hohlraum (52) mit einer Öffnung versehen ist, durch die eine Vorform (8) in den Hohlraum (52) eingesetzt werden kann;
wobei der Hohlraum (52) von einer Innenwand (53) des Trägers (5) begrenzt wird;
und wobei die Innenwand (53) eine Seitenfläche (55) und eine Bodenfläche (54) gegenüber der Öffnung umfasst; wobei jeder Träger (5) vorzugsweise einen Außenteil (58) umfasst, der mit den Rippen (51) versehen ist;
und einen Innenteil (59), der mit dem Hohlraum (52) versehen ist, der in dem Außenteil (58) angeordnet und aus dem Außenteil (58) entnehmbar ist.

17. System (100) zur Herstellung von Vorformen, das eine Kühlvorrichtung (9) nach einem der vorhergehenden Ansprüche und eine Formvorrichtung (101) zur Herstellung der Vorformen umfasst, die der Kühlvorrichtung (9) vorgelagert angeordnet ist;
und vorzugsweise Vorformüberprüfungsmittel (104) umfasst, die vorzugsweise der Kühlvorrichtung (9) vorgelagert und/oder nachgelagert angeordnet sind.

## Revendications

1. Appareil (9) de refroidissement de préformes (8), en particulier préformes de bouteilles, réalisées en matériau thermoplastique comprenant
- une pluralité de supports (5) pour les préformes (8) adaptés pour être déplacés le long d'une trajectoire ; dans lequel chaque support (5) est pourvu extérieurement d'une pluralité d'ailettes (51) ;
et dans lequel chaque support (5) comprend au moins une cavité (52) adaptée pour accueillir une préforme respective (8) ;
**caractérisé en ce que** l'appareil de refroidissement (9) comprend au moins un conduit (11) adapté pour recevoir un flux d'air généré par des moyens de ventilation (21) et configuré pour diriger ledit flux d'air vers les supports (5) de sorte que lorsque les supports (5) et les préformes (8) qui y sont insérées sont au niveau du conduit (11), flanqués par le conduit (11) ou en dessous du conduit (11), au moins les supports (5) sont touchés par ledit flux d'air qui sort du conduit (11).

2. Appareil de refroidissement (9) selon la revendication 1, dans lequel ledit conduit (11) s'étend le long de ladite trajectoire, en particulier de sorte qu'une pluralité de supports (5) est adaptée pour être au niveau du conduit (11), en particulier flanqué par le conduit (11) ou en dessous du conduit (11).

3. Appareil de refroidissement (9) selon la revendication 1 ou 2, dans lequel le conduit (11) est à l'extérieur des préformes (8) insérées dans les supports (5) lorsque les supports (5) sont au niveau du conduit (11), en particulier placés flanqués par le conduit (11) ou en dessous du conduit (11).

4. Appareil de refroidissement (9) selon l'une quelconque des revendications précédentes, dans lequel le conduit (11) comprend au moins un tronçon courbe (113).

5. Appareil de refroidissement (9) selon l'une quelconque des revendications précédentes, dans lequel le conduit (11) comprend une pluralité d'ouvertures, de préférence une pluralité de trous (121, 122, 123), adaptés pour diriger ledit flux d'air vers les supports (5) et de préférence également vers les préformes (8) insérées dans les supports (5).

6. Appareil de refroidissement (9) selon l'une quelconque des revendications précédentes, dans lequel le conduit (11) comprend au moins une rangée d'ouvertures, en particulier des trous (121, 122, 123), adaptés pour diriger ledit flux d'air vers les supports (5), de préférence trois rangées d'ouvertures (121, 122, 123), dont une première rangée d'ouvertures (121) est disposée entre une deuxième rangée d'ouvertures (122) et une troisième rangée d'ouvertures (123), de préférence dans lequel chaque ouverture (121) de la première rangée d'ouvertures définit un axe (J) qui est incliné par rapport à l'axe le long duquel le conduit (11) s'étend.

7. Appareil de refroidissement (9) selon l'une quelconque des revendications précédentes, comprenant un guide (13) adapté pour guider le mouvement de ladite pluralité de supports (5) le long de ladite trajectoire ; dans lequel ledit guide (13) et ledit conduit (11) s'étendent au moins partiellement parallèlement l'un à l'autre, de préférence dans lequel le conduit (11) s'étend au moins partiellement au-dessus du guide (13).

8. Appareil de refroidissement (9) selon la revendication 7, comprenant des moyens de transmission de mouvement (7) auxquels les supports (5) sont assujettis afin d'être déplacés le long de ladite trajectoire ; en particulier dans lequel lesdits moyens de transmission de mouvement (7) sont assujettis au guide (13).

9. Appareil de refroidissement (9) selon l'une quelconque des revendications précédentes, comprenant une chaîne mobile (7) ou une courroie mobile à laquelle lesdits supports (5) sont attachés pour être déplacés le long de ladite trajectoire ; et dans lequel un guide (13) adapté pour guider le mouvement de ladite chaîne (7) ou de ladite courroie est prévu.

10. Appareil de refroidissement (9) selon la revendication 9, dans lequel ledit guide (13) et ledit conduit (11) s'étendent au moins partiellement parallèlement l'un à l'autre ;
dans lequel le conduit (11) s'étend au moins partiellement au-dessus du guide (13) ;
de préférence, dans lequel ledit conduit (11) et ledit guide (13) comprennent chacun un tronçon courbe respectif (113, 133) s'étendant autour d'un axe (K), ledit tronçon courbe respectif (113, 133) étant de préférence hélicoïdal.

11. Appareil de refroidissement (9) selon l'une quelconque des revendications précédentes, comprenant un dispositif (3) configuré pour insérer les préformes (8) à refroidir dans lesdites cavités (52) et extraire les préformes refroidies (8) desdites cavités (52), ledit dispositif (3) étant de préférence adapté pour tourner.

12. Appareil de refroidissement (9) selon la revendication 11, dans lequel ledit dispositif (3) comprend une roue (31) adaptée pour tourner autour d'un axe (Z) ; dans lequel une chaîne mobile (7) ou une courroie mobile est prévue, à laquelle lesdits supports (5) sont attachés pour être déplacés le long de ladite trajectoire ; et dans lequel ladite chaîne mobile (7) ou ladite courroie mobile est en prise avec la roue (31) afin d'être déplacée par la roue (31).

13. Appareil de refroidissement (9) selon la revendication 11 ou 12, dans lequel le dispositif (3) comprend une pluralité de moyens de préhension (33) pour saisir les préformes (8) ; chacun des moyens de préhension (33) étant adapté pour disposer une préforme respective (8) dans une cavité respective (52) et extraire une préforme respective (8) de la cavité respective (52) ;
de préférence dans lequel lesdits moyens de préhension (33) sont adaptés pour être déplacés pour insérer les préformes (8) à refroidir dans la cavité respective (52) et pour extraire les préformes refroidies (8) de la cavité respective (52) et/ou dans lequel chacun desdits moyens de préhension (33) comprend un préhenseur.

14. Appareil de refroidissement (9) selon la revendication 11, 12 ou 13,
dans lequel ledit conduit (11) et ledit guide (13) comprennent un deuxième tronçon respectif (111, 131) qui est proximal à une zone d'insertion de préforme du dispositif (3), et un tronçon respectif (112, 132) qui est proximal à une zone d'extraction de préforme du dispositif (3).

15. Appareil de refroidissement (9) selon la revendication 14, dans lequel ledit conduit (11) et ledit guide (13) comprennent chacun un tronçon courbe respectif (113, 133) qui s'étend autour d'un axe (K), ledit tronçon courbe respectif (113, 133) étant de préférence hélicoïdal ; dans lequel ledit tronçon courbe (113, 133) est disposé entre ledit tronçon (111, 131) à proximité de la zone d'insertion et ledit tronçon (112, 132) à proximité de la zone d'extraction.

16. Appareil de refroidissement selon l'une quelconque des revendications précédentes, dans lequel la cavité (52) est munie d'une ouverture à travers laquelle une préforme (8) peut être insérée dans la cavité (52) ;
dans lequel la cavité (52) est délimitée par une paroi intérieure (53) du support (5) ;
et dans lequel ladite paroi intérieure (53) comprend une surface latérale (55) et une surface inférieure (54) opposée à ladite ouverture ; de préférence dans lequel chaque support (5) comprend une partie extérieure (58) munie desdites ailettes (51) ;
et une partie intérieure (59) munie de ladite cavité (52), qui est disposée dans ladite partie extérieure (58) et extractible de ladite partie extérieure (58).

17. Système (100) de production de préformes comprenant un appareil de refroidissement (9) selon l'une quelconque des revendications précédentes ; et un appareil de moulage (101) pour produire les préformes, disposé en amont de l'appareil de refroidissement (9) ;
et comprenant de préférence des moyens d'inspection de préforme (104) disposés de préférence en amont et/ou en aval de l'appareil de refroidissement (9).
